# EUROPÄISCHE PATENTSCHRIFT

(11) **EP 0 671 606 B1**
(45) Veröffentlichungstag und Bekanntmachung des Hinweises auf die Patenterteilung: **17.03.1999**
(21) Anmeldenummer: 94119566.1
(22) Anmeldetag: 10.12.1994
(51) Int. Cl.: G01D 5/26

(54) **Positionsmesseinrichtung**
Position-measuring device
Dispositif de mesure de positions

(30) Priorität: 02.03.1994 DE 4406797
(43) Veröffentlichungstag der Anmeldung: 13.09.1995
(73) Patentinhaber: Dr. Johannes Heidenhain GmbH, D-83292 Traunreut (DE)
(72) Erfinder: Affa, Alfred, D-83371 Stein/Traun (DE)

(56) Entgegenhaltungen:
- EP-A- 0 118 607
- EP-A- 0 465 966
- DE-A- 3 605 789
- GB-A- 2 079 943
- PATENT ABSTRACTS OF JAPAN vol. 11, no. 52 (P-548) [2499] , 18.Februar 1987 & JP-A-61 219818 (NIPPON KOGAKU K.K.), 30.September 1986

## Beschreibung

Die Erfindung betrifft eine Positionsmeßeinrichtung gemäß dem Oberbegriff des Anspruches 1 und 9.

Derartige Positionsmeßeinrichtungen werden zur Messung der Relativlage zweier Bauteile eingesetzt und können als Längen- oder Winkelmeßeinrichtungen ausgeführt sein.

Aus der DE 25 05 587 C3 ist eine Längenmeßeinrichtung bekannt, bei der eine Maßverkörperung an einem Trägerkörper mittels einer Klebeschicht befestigt ist. Um Meßungenauigkeiten bei unterschiedlichen thermischen Ausdehnungskoeffizienten der Maßverkörperung und des Trägerkörpers zu vermeiden, erfolgt die Befestigung ohne direkte Berührung zwischen der Maßverkörperung und dem Trägerkörper, wobei ein elastischer Kleber Verwendung findet. Nachteilig ist dabei, daß die Maßverkörperung durch diese ausschließlich elastische Befestigung nicht ausreichend fest gehalten ist und zu Schwingungen führt.

Um diesen Nachteil zu vermeiden, wird in der DE 26 43 304 B2 vorgeschlagen, die Maßverkörperung auf den Rändern einer in Meßrichtung verlaufenden rechteckigen Nut eines Trägerkörpers aufliegend zu befestigen. Die Maßverkörperung ist in seiner Mitte mittels eines unelastischen Klebemittels in der Nut und zu beiden Seiten mittels eines hochelastischen Klebemittels in der Nut mit dem Trägerkörper verbunden. Dies hat wiederum den Nachteil, daß die Maßverkörperung aufgrund der elastischen Befestigung an ausschließlich einer Fläche leicht zum Schwingen angeregt werden kann. Der direkte Kontakt der Maßverkörperung mit den Rändern der Nut hat weiterhin den Nachteil, daß fertigungsbedingte Unebenheiten des Trägerkörpers auf die Maßverkörperung übertragen werden, wodurch bei der Messung Fehler auftreten können.

Um die Schwingungen der Maßverkörperung zu reduzieren, wurde weiterhin vorgeschlagen, die Maßverkörperung nicht nur über eine Fläche an dem Trägerkörper zu befestigen. Eine derartige Positionsmeßeinrichtung, von der diese Erfindung ausgeht, ist in der DE 31 18 607 C2 beschrieben. Zur Aufnahme der Maßverkörperung ist in dem Trägerkörper eine Längsnut eingebracht. Die Maßverkörperung steht mit einer Seitenfläche der Nut und mit der Grundfläche der Nut in direktem Kontakt. Der Raum zwischen der weiteren Seitenfläche der Nut und einer Fläche der Maßverkörperung ist mit einem Gummi stab und einem elastischen Kleber ausgefüllt. Die Maßverkörperung ist also in einem Teilbereich eingespannt befestigt. Der Nachteil bei dieser Einrichtung besteht darin, daß der mit elastischem Kleber auszufüllende Raum relativ breit ist, was sich auf die Schwingungseigenschaften der Maßverkörperung wieder negativ auswirkt. Ein weiterer Nachteil besteht darin, daß durch die Einspannung der Maßverkörperung mittels des Gummistabes die freie Längsausdehnung zwischen der Maßverkörperung und des Trägerkörpers behindert wird. Um diesen Nachteil zu vermeiden, wurde in der DE 33 12 534 A1 vorgeschlagen, den Gummistab nur abschnittsweise vorzusehen und zusätzlich die Maßverkörperung am Boden der Nut über ein Abstandsstück zu lagern. Diese Lösung hat den Nachteil, daß abschnittsweise unterschiedliche Kräfte auf die Maßverkörperung wirken und zu Meßungenauigkeiten führen können.

Bei der Positionsmeßeinrichtung gemäß der JP 61-219818 A ist zwischen einer Seitenfläche einer Nut des Trägerkörpers und des Maßstabes eine Gleitschicht vorgesehen und auf der anderen Seite des Maßstabes wird der Maßstab wiederum über einen Gummistab in der Nut eingespannt.

In der DE 36 05 789 C1 - von der unsere Erfindung ausgeht - ist eine Positionsmeßeinrichtung beschrieben, bei der die Maßverkörperung ebenfalls in einer Nut eines Trägerkörpers befestigt ist. Die Maßverkörperung ist an einer Schmalseite in dauerelastischer Vergußmasse eingebettet. Um Längenausdehnungen zwischen der Maßverkörperung und dem Trägerkörper zu gewährleisten, muß die Vergußmasse hochelastisch sein, was die Schwingungseigenschaften und die Stabilität der Maßverkörperung nachteilig beeinflußt. Um eine ausreichende Stabilität zu erreichen, ist eine zusätzliche Spannpratze vorgesehen.

Aufgabe der Erfindung ist es, eine Positionsmeßeinrichtung zu schaffen, bei der ungleiche thermische Eigenschaften der Maßverkörperung und des Trägerkörpers praktisch keine Verfälschungen des Meßergebnisses hervorrufen und die Maßverkörperung trotzdem relativ schwingungsfest am Trägerkörper befestigt ist.

Diese Aufgabe wird erfindungsgemäß durch die Merkmale des Anspruches 1 bzw. 9 gelöst.

Die Vorteile der Erfindung bestehen darin, daß eine nahezu ungehinderte Längenausdehnung des Trägerkörpers relativ zur Maßverkörperung erfolgen kann. Dieser Vorteil kommt besonders dann zum Tragen, wenn die Maßverkörperung aus Glas und der Trägerkörper aus Metall, beispielsweise Aluminium ist. Weiterhin ist eine stabile und schwingungsarme Befestigung gewährleistet.

Zweckdienliche Ausbildungen sind Gegenstand der abhängigen Ansprüche.

Längenmeßeinrichtungen nach der Erfindung werden anhand der Zeichnungen näher erläutert.

Es zeigt
- Figur 1: eine perspektivische Darstellung einer Längenmeßeinrichtung im Teilschnitt,
- Figur 2: einen Querschnitt der Längenmeßeinrichtung gemäß Figur 1 im Befestigungsbereich der Maßverkörperung,
- Figur 3: den Befestigungsbereich der Maßverkörperung bei einer weiteren Längenmeßeinrichtung,
- Figur 4 bis Figur 10: Befestigungsbereiche von Maßverkörperungen weiterer Längenmeßeinrichtungen.

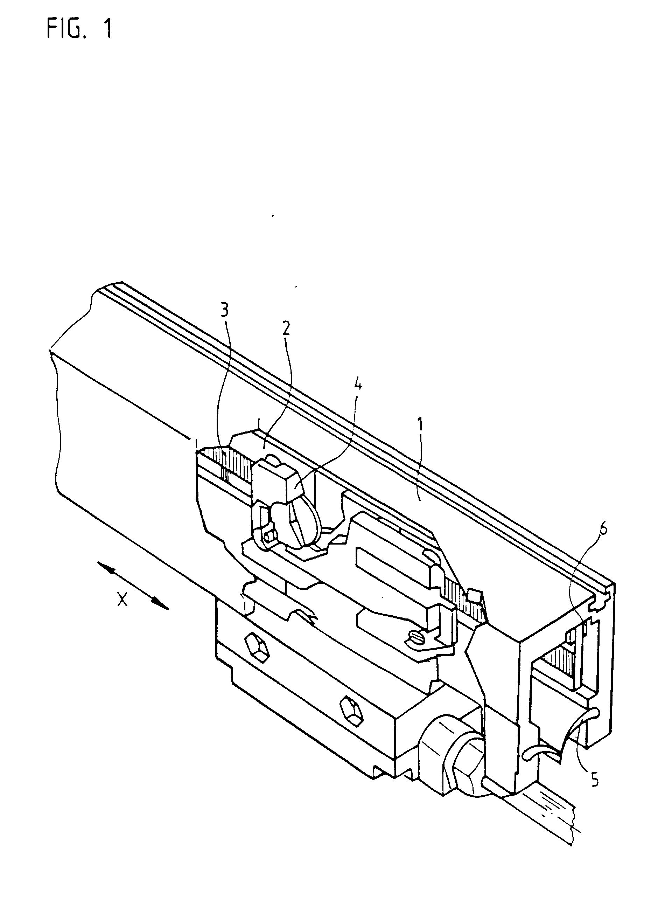

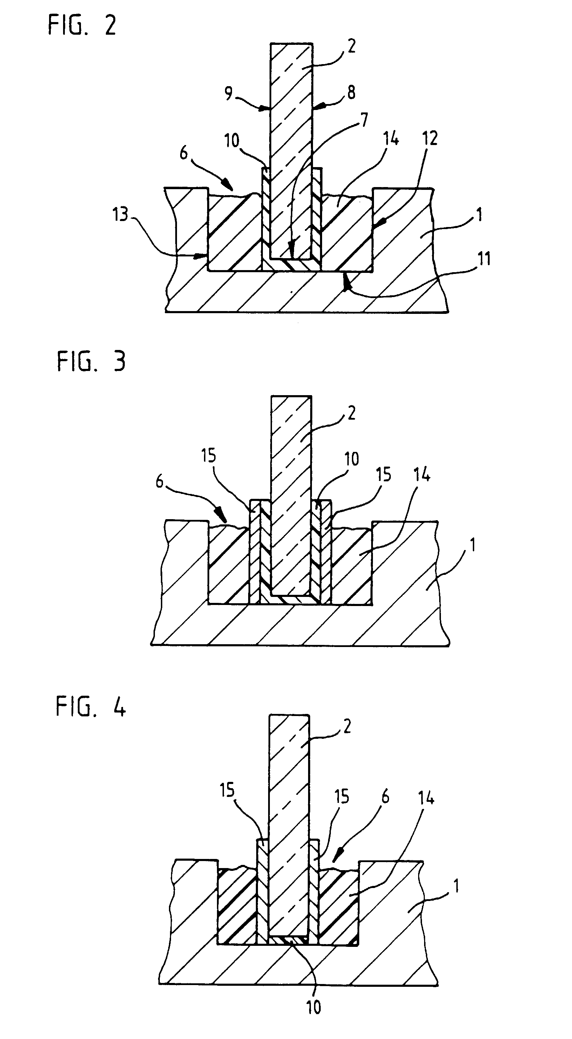

Eine in Figur 1 und Figur 2 dargestellte Längenmeßeinrichtung besteht aus einem Gehäuse 1 als Trägerkörper für eine Maßverkörperung 2. Auf der Maßverkörperung 2 ist eine Teilung 3 aufgebracht, die von einer Abtasteinrichtung 4 photoelektrisch abgetastet wird. Das Gehäuse 1 besteht aus Aluminium und die Maßverkörperung 2 aus Glas. Um die Relativbewegung zwischen zwei Bauteilen zu messen, ist das Gehäuse 1 an einem dieser Bauteile und die Abtasteinrichtung 4 am anderen Bauteil befestigt. Die Maßverkörperung 2 und die Abtasteinrichtung 4 sind durch das Gehäuse 1 und durch eine Dichtung 5 vor Umwelteinflüssen abgeschirmt.

Gemäß der Erfindung ist in dem Gehäuse 1 eine in Meßrichtung X verlaufende Nut 6 vorgesehen, in der die Maßverkörperung 2 längsverschieblich und trotzdem relativ stabil und schwingungsfest eingebracht ist. Die Maßverkörperung 2 ist an einer schmalen Kante 7 sowie an zwei daran anschließende Bereiche der Seitenflächen 8, 9 mit einer dünnen hochelastischen Klebstoffschicht 10 (Dicke etwa 0,1mm) versehen. Über eine Vorrichtung, welche die Ebenheit der Maßverkörperung 2 vorgibt, wird diese Maßverkörperung 2 am Grund 11 der Nut 6 an ihrer schmalen Kante 7 fixiert, so daß zwischen der Klebstoffschicht 10 und den Seitenflächen 12, 13 der Nut 6 jeweils ein Zwischenraum entsteht. Diese Zwischenräume werden mit einer Vergußmasse 14 aufgefüllt. Die Klebstoffschicht 10 zwischen der Maßverkörperung 2 und dem Gehäuse 1 ist eine Trennschicht, die Relativbewegungen zwischen der Maßverkörperung 2 und dem Gehäuse 1 aufgrund von unterschiedlichen Ausdehnungskoeffizienten in Längsrichtung X zuläßt. Die relativ fest aushärtende Vergußmasse 14 garantiert, daß die Maßverkörperung 2 trotz Ausdehnungsmöglichkeit schwingungsarm im Gehäuse 1 gehalten ist. Ein Querschnitt dieser Längenmeßeinrichtung ist in Figur 2 dargestellt.

Eine weitere Ausgestaltung der Erfindung ist in Figur 3 im Querschnitt gezeigt. Im Gehäuse 1 ist wiederum eine Nut 6 eingebracht, in der die Maßverkörperung 2 befestigt ist. Die Trennschicht zwischen der Maßverkörperung 2 und der Vergußmasse 14 besteht in diesem Fall aus einer elastischen Klebstoffschicht 10 und einer Gleitschicht 15. Die Gleitschicht 15 kann beispielsweise das Schutzpapier der Klebefolie sein, die die Klebeschicht 10 bildet. Diese Ausführungsform hat den Vorteil, daß die Längsverschieblichkeit des Gehäuses 1 gegenüber der Maßverkörperung 2 auch bei großen Unterschieden der Ausdehnungskoeffizienten und bei großen Meßlängen gewährleistet ist, da durch die Gleitschicht 15 zusätzlich eine Gleitbewegung ermöglicht wird.

In Figur 4 ist eine weitere vorteilhafte Befestigungsart dargestellt. Wie in den Beispielen gemäß Figur 1 bis Figur 3 ist die Maßverkörperung 2 an der schmalen Kante mit einer Klebstoffschicht 10 versehen und damit in der Nut 6 fixiert. Diese Klebstoffschicht 10 ist in Meßrichtung X elastisch, wodurch Ausdehnungen zwischen der Maßverkörperung 2 und dem Gehäuse 1 möglich sind. Um die Maßverkörperung 2 in der Nut 6 möglichst schwingungsfest zu halten, ist der Raum zwischen den Seitenflächen der Maßverkörperung 2 und den Seitenflächen der Nut 6 mit einer Vergußmasse 14 aufgefüllt. Damit durch die Vergußmasse 14 die Ausdehnungsmöglichkeit zwischen Maßverkörperung 2 und Gehäuse 1 nicht behindert wird, ist zwischen der Maßverkörperung 2 und der Vergußmasse 14 eine Trennschicht in Form einer Gleitschicht 15 vorgesehen. Diese Gleitschicht 15 ist beispielsweise eine Teflonfolie oder ein öl- bzw. silikonhaltiges Papier.

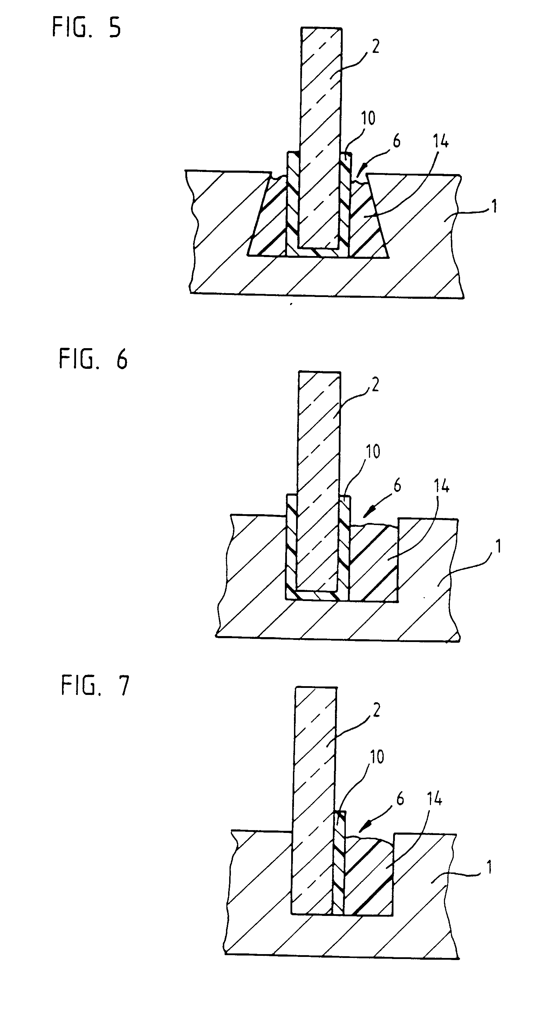

Um die Festigkeit der Befestigung noch zu erhöhen, ist es bei allen Ausführungsbeispielen möglich, die Nut 6 derart auszuformen, daß ein optimaler Formschluß zwischen der Nut 6 und der Vergußmasse 14 entsteht. Ein Beispiel hierzu ist in Figur 5 dargestellt. Wie in Figur 2, so ist auch hier zwischen der Maßverkörperung 2 und der Vergußmasse 14 ein Trennelement in Form einer elastischen Klebstoffschicht 10 vorgesehen. Der Formschluß ist hier durch eine Nut mit Hinterschneidungen, beispielsweise einer schwalbenschwanzförmigen Nut 6 gewährleistet. Die Nut 6 kann aber auch andere Profilformen aufweisen, die einen Formschluß garantieren. Beispiele hierzu sind in der DE 40 21 919 A1 zu finden.

Die bisher gezeigten Ausführungen haben den Vorteil, daß die Befestigung der Maßverkörperung 2 unabhängig von der Geradheit der Seitenflächen der Nut 6 erfolgt. Ist gewährleistet, daß zumindest eine Seitenfläche der Nut 6 ausreichend gerade ist, dann kann die Maßverkörperung 2 auch daran anliegend befestigt werden, wie in den folgenden Beispielen nach Figuren 6 bis 9 gezeigt ist.

In Figur 6 ist die Maßverkörperung 2 wie in Figur 2 mit einer elastischen Klebstoffschicht 10 versehen. Die Klebstoffschicht 10 auf der schmalen Kante sowie auf einer Seitenfläche der Maßverkörperung 2 hat direkten Kontakt mit Innenflächen der Nut 6 im Gehäuse 1. Der Raum zwischen der Klebstoffschicht 10 auf der weiteren Seitenfläche der Maßverkörperung 2 und der weiteren Seitenfläche der Nut 6 ist mit einer Vergußmasse 14 aufgefüllt. Diese Klebstoffschicht 10 zwischen der Maßverkörperung 2 und der Vergußmasse 14 ist die Trennschicht gemäß der Erfindung.

Bei dem Beispiel gemäß Figur 7 hat die Maßverkörperung 2 mit der schmalen Kante und einer Seitenfläche direkten Kontakt mit den Innenflächen der Nut 6. Die Einspannung in der Nut 6 erfolgt auch hier mit der Vergußmasse 14, wobei zwischen der Maßverkörperung 2 und der Vergußmasse 14 wiederum eine Klebstoffschicht 10 als Trennschicht vorgesehen ist.

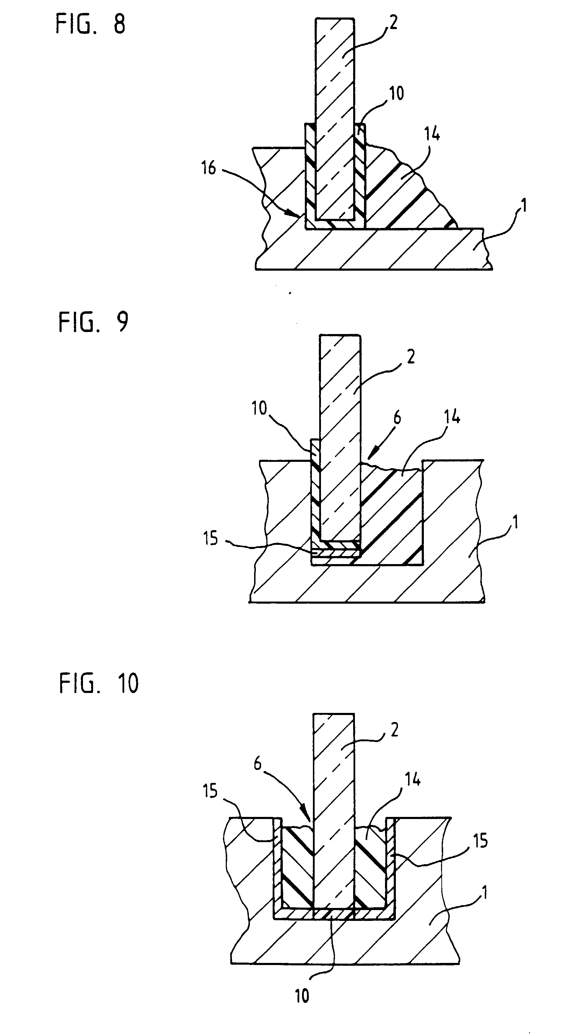

In Figur 8 ist gezeigt, daß bei entsprechender Zähflüssigkeit der Vergußmasse 14 die Einspannung der Maßverkörperung auch ohne Nut möglich ist. Durch das Anbringen der Vergußmasse 14 wird die Maßverkörperung 2 in dem rechtwinkeligen Absatz 16 des Gehäuses 1 gehalten. Eine elastische Klebstoffschicht 10 ist an der Maßverkörperung 2 wie in Figur 2 beschrieben vorgesehen.

Bei den Beispielen gemäß Figur 5 bis 8 ist als Trennschicht eine Klebstoffschicht 10 vorgesehen. Nach der Erfindung ist es auch hier möglich, anstelle der Klebstoffschicht 10, eine Gleitschicht wie in Figur 4 dargestellt, vorzusehen. Desweiteren sind auch Kombinationen von Klebstoffschicht und Gleitschicht als Trennschicht besonders vorteilhaft.

Das weitere Ausführungsbeispiel gemäß Figur 9 ist eine Variante des Beispieles gemäß Figur 6. Die Maßverkörperung 2 ist an ihrer schmalen Kante an der Unterseite sowie an einer daran anschließenden Seitenfläche mit einer elastischen Klebstoffschicht 10 versehen. Über die Klebstoffschicht 10 ist die Maßverkörperung 2 seitlich an einer Seitenfläche der Nut 6 fixiert. Auf der Klebstoffschicht 10 der schmalen Kante ist eine Gleitschicht 15 vorgesehen. Zwischen dieser Gleitschicht 15 und der Grundfläche der Nut 6 ist ein geringer Abstand, in den die Vergußmasse 14 fließen kann. Die Trennschicht besteht also in diesem Bereich aus der Klebstoffschicht 10 und der Gleitschicht 15.

Der geringe Abstand (etwa 0,1 bis 0,5 mm) zwischen der Gleitschicht 15 und der Grundfläche der Nut 6 gewährleistet, daß die Maßverkörperung 2 ausschließlich in Meßrichtung X längsverschieblich gegenüber dem Gehäues 1 beweglich gelagert ist. Je dünner der Spalt für die Vergußmasse 14, desto weniger kann die Maßverkörperung 2 senkrecht zur Meßrichtung X bewegt werden, und desto elastischer darf die Vergußmasse 14 aushärten, da die Nachgiebigkeit auch von der Dicke der Vergußmasse 14 abhängt.

Am Ausführungsbeispiel nach Figur 10 wird verdeutlicht, daß die Trennschicht gemäß der Erfindung auch zwischen der Vergußmasse 14 und Flächen des Gehäuses 1 vorgesehen sein kann. Im Gehäuse 1 ist wiederum eine Nut 6 eingebracht. Die Maßverkörperung 2 ist mit einer schmalen Kante über eine Klebstoffschicht 10 am Boden der Nut 6 fixiert. Um auch hier eine reibungsarme Längenausdehnung der Maßverkörperung 2 relativ zum Gehäuse 1 zu gewährleisten, sind an den übrigen Flächen der Nut 6 Gleitschichten 15 vorgesehen, die die Vergußmasse 14 von dem Gehäuse 1 trennen.

In nicht gezeigter Weise ist es weiterhin vorteilhaft, eine Trennschicht zwischen der Maßverkörperung und der Vergußmasse sowie gleichzeitig zwischen der Vergußmasse und dem Trägerkörper vorzusehen.

Bei allen Ausführungsformen kann die Trennschicht auch mehrlagig, z.B. dreilagig aufgebaut sein. Beispielsweise in der Mitte eine Klebstoffschicht und beidseitig eine Gleitschicht.

Um eine schwingungsfeste Befestigung zu erreichen, wird vorteilhaft eine Vergußmasse 14 verwendet, die relativ fest aushärtet und daher relativ unelastisch ist. Je dünner der Spalt für die Vergußmasse 14, desto elastischer darf sie aushärten, bei gleicher stabiler Befestigungswirkung.

Die Erfindung ist auch bei Winkelmeßeinrichtungen einsetzbar. In diesem Fall ist die Teilung der Maßverkörperung auf einem Kreisbogen aufgebracht.

Weiterhin kann die Erfindung nicht nur bei Maßverkörperungen aus Glas verwendet werden. Die Maßverkörperung kann auch aus Metall oder Kunststoff bestehen. Ebenso ist die Erfindung nicht auf das lichtelektrische Abtastprinzip beschränkt. Die Maßverkörperung kann auch eine Teilung aufweisen, die auf dem kapazitiven, induktiven oder magnetischen Prinzip beruht. Auf der Maßverkörperung können auch mehrere Teilungsspuren oder eine absolute Informationsspur aufgebracht sein.

Der Trägerkörper für die Maßverkörperung 2 muß nicht notwendigerweise ein Gehäuse sein, er kann auch nur eine Metallschiene sein, wie sie bei sogenannten offenen Systemen bekannt ist.

Bei allen Ausführungsbeispielen ist die Breite der Nut 6 etwa 6 mm, die Dicke der Maßverkörperung 2 etwa 3 mm, die Dicke der Klebstoffschicht 10 sowie der Gleitschichten 15 etwa 0,1 mm, so daß für den Spalt für die Vergußmasse 14 noch etwa 3 mm verbleiben. Die Breite des Spaltes mit der Vergußmasse 14 ist also ein Vielfaches der Dicke der Klebstoffschicht 10 sowie der Gleitschicht 15.

## Patentansprüche

1. Positionsmeßeinrichtung mit einer Maßverkörperung (2), die von einer Abtasteinrichtung (4) zur Ermittlung von Positionsmeßwerten abgetastet wird, wobei die Maßverkörperung (2) an einem Trägerkörper (1) befestigt ist, und daß zur Befestigung eine Vergußmasse (14) zumindest zwischen einer Fläche (8, 9) der Maßverkörperung (2) und einer Fläche (12, 13) des Trägerkörpers (1) eingesetzt ist, dadurch gekennzeichnet, daß die Maßverkörperung (2) an mindestens einer Seitenfläche (8,9) und/oder ihrer Unterkante (7) mittels einer dünnen, hochelastischen Klebstoffschicht (10) am Trägerkörper (1) befestigt ist, und daß zumindest zwischen einer Fläche (8, 9) der Maßverkörperung (1) und der Vergußmasse (14) und/oder zwischen zumindest einer Fläche (12, 13) des Trägerkörpers (1) und der Vergußmasse (14) eine Trennschicht in Form einer hochelastischen Klebstoffschicht (10) und/oder Gleitschicht (15) angebracht ist, wobei die hochelastische Klebstoffschicht (10) und die Trennschicht (10, 15) die thermischen Längenänderungen der Maßverkörperung (2) im wesentlichen unabhängig vom Trägerkörper (1) in Meßrichtung (X) zulassen.

2. Positionsmeßeinrichtung nach Anspruch 1, dadurch gekennzeichnet, daß in dem Trägerkörper (1) eine in Meßrichtung (X) verlaufende Nut (6) vorgesehen ist, und daß die Maßverkörperung (2) mit ihrer Unterkante (7) unter Zwischenschaltung einer hochelastischen Klebstoffschicht (10) am Grund der Nut (6) fixiert ist, und daß zumindest in den Raum zwischen einer Seitenfläche (8,9) der Maßverkörperung (2) und einer Seitenfläche (12, 13) der Nut (6) die Vergußmasse (14) eingebracht ist.

3. Positionsmeßeinrichtung nach Anspruch 2, dadurch gekennzeichnet, daß die Nut (6) Hinterschneidungen aufweist.

4. Positionsmeßeinrichtung nach Anspruch 2 oder 3, dadurch gekennzeichnet, daß die Maßverkörperung (2) etwa in der Mitte der Nut (6) befestigt ist und in den beiden Räumen zwischen den Seitenflächen (8, 9) der Maßverkörperung (2) und den Seitenflächen (12, 13) der Nut (6) die Vergußmasse (14) eingebracht ist.

5. Positionsmeßeinrichtung nach Anspruch 2, dadurch gekennzeichnet, daß die Maßverkörperung (2) unter Zwischenschaltung der elastischen Klebstoffschicht (10) an einer Seitenfläche der Nut (6) anliegt, und daß zwischen der weiteren Seitenfläche der Maßverkörperung (2) und der weiteren Seitenfläche der Nut (6) die Vergußmasse (14) eingebracht ist.

6. Positionsmeßeinrichtung nach einem der vorgehenden Ansprüche, dadurch gekennzeichnet, daß die Vergußmasse (14) eine fest aushärtende Vergußmasse ist.

7. Positionsmeßeinrichtung nach einem der Ansprüche 1 bis 6, dadurch gekennzeichnet, daß die Gleitschicht (15) eine Teflonfolie oder ein öl- oder silikonhaltiges Papier ist.

8. Positionsmeßeinrichtung nach einem der Ansprüche 1 bis 7, dadurch gekennzeichnet, daß die Trennschicht eine Klebefolie ist, bei der die Gleitschicht (15) vom Schutzpapier der Klebstoffschicht (10) gebildet wird.

9. Positionsmeßeinrichtung mit einer Maßverkörperung (2), die von einer Abtasteinrichtung (4) zur Ermittlung von Positionsmeßwerten abgetastet wird, wobei die Maßverkörperung (2) an einem Trägerkörper (1) befestigt ist, und daß zur Befestigung eine Vergußmasse (14) zumindest zwischen einer Fläche (8, 9) der Maßverkörperung (2) und einer Fläche (12, 13) des Trägerkörpers (1) eingesetzt ist, dadurcn gekennzeichnet, daß die Vergußmasse (14) eine fest aushärtende Vergußmasse ist und daß die Maßverkörperung (2) an mindestens einer Seitenfläche (8, 9) und/oder ihrer Unterkante (7) mittels einer dünnen, hochelastischen Klebstoffschicht (10) mit dem Trägerkörper (1) und/oder der Vergußmasse (14) verbunden ist, wobei die hoch elastische Klebstoffschicht (10) die thermischen Längenänderungen der Maßverkörperung (2) im wesentlichen unabhängig vom Trägerkörper (1) in Meßrichtung (X) zuläßt.

## Claims

1. A position measuring device with a measuring entity (2) which is sensed by a sensing device (4) to determine position measurement values, wherein the measuring entity (2) is fixed on a support body (1), and in which a sealant compound (14) is employed for the fixing at least between one surface (8, 9) of the measuring entity (2) and a surface (12, 13) of the support body (1), characterized in that the measuring entity (2) is fixed on the support body (1) at at least one side surface (8, 9) and/or its bottom edge (7) by means of a thin, highly elastic adhesive layer (10) and in that a separation layer in the form of a highly elastic adhesive layer (10) and/or a slip layer (15) is applied at least between one surface (8, 9) of the measuring entity (2) and the sealant compound (14) and/or between at least one surface (12, 13) of the support body (1) and the sealant compound (14), wherein the highly elastic adhesive layer (10) and the separation layer (10, 15) allow the thermal changes in length of the measuring entity (2) in the measuring direction (X) substantially independent of the support body (1).

2. A position measuring device according to claim 1, characterized in that a groove (6) running in the measuring direction (X) is provided in the support body (1) and in that the measuring entity (2) is fixed at its bottom edge (7) on the base of the groove (6), with interposition of a highly elastic adhesive layer (10), and in that the sealant compound (14) is introduced at least in the space between one side surface (8, 9) of the measuring entity (2) and one side surface (12, 13) of the groove (6).

3. A position measuring device according to claim 2, characterized in that the groove (6) has undercuts.

4. A position measuring device according to claim 2 or 3, characterized in that the measuring entity (2) is fixed approximately in the centre of the groove (6) and the sealant compound (14) is introduced in the two spaces between the side surfaces (8, 9) of the measuring entity (2) and the side surfaces (12, 13) ofthe groove (6).

5. A position measuring device according to claim 2, characterized in that the measuring entity (2) bears on one side surface of the groove (6) with interposition of the elastic adhesive layer (10) and in that the sealant compound (14) is introduced between the further side surface of the measuring entity (2) and the further side surface of the groove (6).

6. A position measuring device according to any of the preceding claims, characterized in that the sealant compound (14) is a solidly curing sealant compound.

7. A position measuring device according to any of claims 1 to 6, characterized in that the slip layer (15) is a Teflon film or a paper containing silicone.

8. A position measuring device according to any of claims 1 to 7, characterized in that the separation layer is an adhesive film while the slip layer (15) is formed by the protective paper of the adhesive layer (10).

9. A position measuring device with a measuring entity (2) which is sensed by a sensing device (4) to determine position measurement values, wherein the measuring entity (2) is fixed on a support body (1), and in which a sealant compound (14) is employed for the fixing at least between one surface (8, 9) of the measuring entity (2) and a surface (12, 13) of the support body (1), characterized in that the sealant compound (14) is a solidly curing sealant compound and in that the measuring entity (2) is connected to the support body (1) and/or the sealant compound (14) at at least one side surface (8, 9) and/or its bottom edge (7) by means of a thin, highly elastic adhesive layer (10), wherein the highly elastic adhesive layer (10) allows the thermal changes in length of the measuring entity (2) in the measuring direction (X) substantially independent of the support body (1).

## Revendications

1. Dispositif de mesure de position comportant une mesure matérialisée (2) qui est palpée par un dispositif de palpage (4) aux fins de déterminer des valeurs de position, la mesure matérialisée (2) étant fixée à un élément de support (1) et, pour la fixation, une masse coulable (14) étant appliquée au moins entre une surface (8, 9) de la mesure matérialisée (2) et une surface (12, 13) de l'élément de support (1), caractérisé par le fait que la mesure matérialisée (2) est fixée au niveau d'au moins une surface latérale (8, 9) et/ou de son bord inférieur (7) sur l'élément de support (1) à l'aide d'une fine couche d'adhésif (10) à haute élasticité et par le fait qu'une couche de séparation sous la forme d'une couche d'adhésif (10) à haute élasticité et/ou d'une couche de glissement (15) est appliquée au moins entre une surface (8, 9) de la mesure matérialisée (1) et la masse coulable (14) et/ou entre au moins une surface (12, 13) de l'élément de support (1) et la masse coulable (14), la couche d'adhésif à haute élasticité (10) et la couche de séparation (10, 15) autorisant les variations de longueur d'origine thermique de la mesure matérialisée (2) essentiellement indépendamment de l'élément de support (1), dans la direction de mesure (X).

2. Dispositif de mesure de position selon la revendication 1. caractérisé par le fait qu'une rainure (6) qui s'étend dans la direction de mesure (X) est prévue dans l'élément de support (1) et par le fait que la mesure matérialisée (2) est fixée par son bord inférieur (7) en interposant une couche d'adhésif (10) à haute élasticité sur le fond de la rainure (6) et par le fait que la masse coulable (14) est appliquée dans l'espace entre une surface latérale (8, 9) de la mesure matérialisée (2) et une surface latérale (12, 13) de la rainure (6).

3. Dispositif de mesure de position selon la revendication 2, caractérisé par le fait que la rainure (6) présente des faces en contre-dépouille.

4. Dispositif de mesure de position selon la revendication 2 ou 3, caractérisé par le fait que la mesure matérialisée (2) est fixée sensiblement au milieu de la rainure (6) et que la masse coulable (14) est appliquée dans les deux espaces entre les surfaces latérales (8, 9) de la mesure matérialisée (2) et les surfaces latérales (12, 13) de la rainure (6).

5. Dispositif de mesure de position selon la revendication 2. caractérisé par le fait que la mesure matérialisée (2) est appliquée contre une surface latérale de la rainure (6) avec interposition de la couche d'adhésif (10) élastique et par le fait que la masse coulable (14) est appliquée entre l'autre surface latérale de la mesure matérialisée (2) et l'autre surface latérale de la rainure (6).

6. Dispositif de mesure de position selon une des revendications précédentes, caractérisé par le fait que la masse coulable (14) est une masse masse coulable qui durcit entièrement.

7. Dispositif de mesure de position selon une des revendications 1 à 6, caractérisé par le fait que la couche de glissement (15) est un film de téflon ou un papier huilé ou siliconé.

8. Dispositif de mesure de position selon une des revendications 1 à 7, caractérisé par le fait que la couche de séparation est un film adhésif dans lequel la couche de glissement (15) est formée par le papier de protection de la couche d'adhésif (10).

9. Dispositif de mesure de position comportant une mesure matérialisée (2) qui est palpée par un dispositif de palpage (4) aux fins de déterminer des valeurs de position, la mesure matérialisée (2) étant fixée à un élément de support (1) et pour la fixation, une masse coulable (14) étant appliquée au moins entre une surface (8, 9) de la mesure matérialisée ( 2 ) et une surface (12, 13) de l'élément de support (1), caractérisé par le fait que la masse coulable (14) est une masse durcissant entièrement et que la mesure matérialisée (2) est liée au niveau d'au moins une surface latérale (8, 9) et/ou de son bord inférieur (7) à l'élément de support (1) et à la masse coulable (14) à l'aide d'une fine couche d'adhésif (10) à haute élasticité, la couche d'adhésif (10) à haute élasticité autorisant les variations de longueur d'origine thermique de la mesure matérialisée (2), essentiellement indépendamment de l'élément de support (1) dans la direction de mesure (X).
